**Europäisches Patentamt**

(19) **European Patent Office**

**Office européen des brevets**

(11) Numéro de publication: **0 029 782**

**B1**

(12) **FASCICULE DE BREVET EUROPEEN**

(45) Date de publication du fascicule du brevet: **12.09.84**

(51) Int. Cl.³: **F 16 L 27/08, F 16 J 15/16**

(21) Numéro de dépôt: **80401661.6**

(22) Date de dépôt: **19.11.80**

(54) Raccord tournant pour le transfert de produits fluides.

(30) Priorité: **27.11.79 FR 7929183**

(43) Date de publication de la demande:
**03.06.81 Bulletin 81/22**

(45) Mention de la délivrance du brevet:
**12.09.84 Bulletin 84/37**

(84) Etats contractants désignés:
**DE GB IT**

(56) Documents cités:
**FR-A-1 207 794**
**FR-A-2 066 553**
**FR-A-2 145 226**
**GB-A- 942 777**
**US-A-2 269 431**
**US-A-3 301 568**

(73) Titulaire: **FMC EUROPE S.A. Société anonyme dite:**
**Route des Clérimois B.P.91**
**F-89103 Sens (FR)**

(72) Inventeur: **Ehret, Thomas**
**3, rue Victor Hugo**
**89100 Malay-le-Grand (FR)**

(74) Mandataire: **Rinuy, Guy et al**
**Cabinet Rinuy et Santarelli 14, Avenue de la Grande Armée**
**F-75017 Paris (FR)**

Courier Press, Leamington Spa, England.

## Description

La présente invention a pour objet un raccord tournant pouvant être utilisé pour transférer, alternativement, un fluide à température ambiante et un autre fluide à basse température par exemple des essences légères ou du naphta à température ambiante et du méthane liquéfié à basse température.

On connaît les raccords dits cryogéniques à deux niveaux ou moyens d'étanchéité (primaire et secondaire) prévus, notamment sur les bras de chargement et de déchargement de produits liquéfiés à basse température. Ces moyens d'étanchéité sont, en général, de section droite en forme de "U".

On connaît par le GB—A—942.777 un raccord tournant du type cryogénique correspondant au préambule de la revendication 1. Le moyen d'étanchéité primaire (20—30) est monté sur des ressorts afin qu'il s'applique de manière constante contre l'élément du raccord. Le moyen d'étanchéité secondaire qui peut, notamment, être réalisé en "Téflon", est comprimé, en "créneau", entre une bride et l'élément du raccord.

On connaît par le US—A—3.301.568 un raccord tournant du type cryogénique dont un joint unique est expansible dans une chambre annulaire sous l'action d'un ressort. L'enveloppe en "Téflon" non élastique du joint contient un anneau en acier présentant des doigts.

Le but de l'invention est d'éviter que les produits qui sont liquides à température ambiante et deviennent solides à basse température, ne viennent en contact avec les étanchéités, en général en forme de "U", prévues pour le service à basse température. Si ces produits restaient captifs dans ces étanchéités en "U", en se solidifiant à basse température, ils nuiraient à leur étanchéité. Par contre, à basse température le joint supplémentaire étant mis hors service, le raccord se trouve exactement dans les mêmes conditions de travail que celles prévues habituellement en service basse température. On obtient le but recherché par l'invention telle qu'elle est caractérisée dans la revendication 1. Des modes particuliers de réalisation de l'invention apparaissent dans les revendications dépendantes.

D'autres caractéristiques et avantages de la présente invention ressortiront de la description qui va suivre faite en regard des dessins annexés sur lesquels:

la figure 1 est une vue en coupe d'une portion d'un raccord tournant selon l'invention;

la figure 2 représente en perspective et en vue éclatée deux éléments de ce raccord;

la figure 3 est une vue également en coupe d'une portion plus fragmentaire d'une variante d'un raccord selon l'invention;

la figure 4 est une vue en perspective, à plus petite échelle, d'un élément du raccord représenté à la figure 3; et

la figure 5 est une vue en coupe, comparable à celle de la figure 1, d'une autre variante.

Dans les formes de réalisation représentés, le raccord tournant selon l'invention est en trois parties (A), (B) et (C) et montre les deux niveaux d'étanchéité en forme de "U" (d) et (e) des raccords dits cryogéniques.

Un niveau d'étanchéité supplémentaire est réalisé par un joint fixe (1) de préférence en élastomère, disposé dans une gorge (2) pratiquée dans la pièce (A):

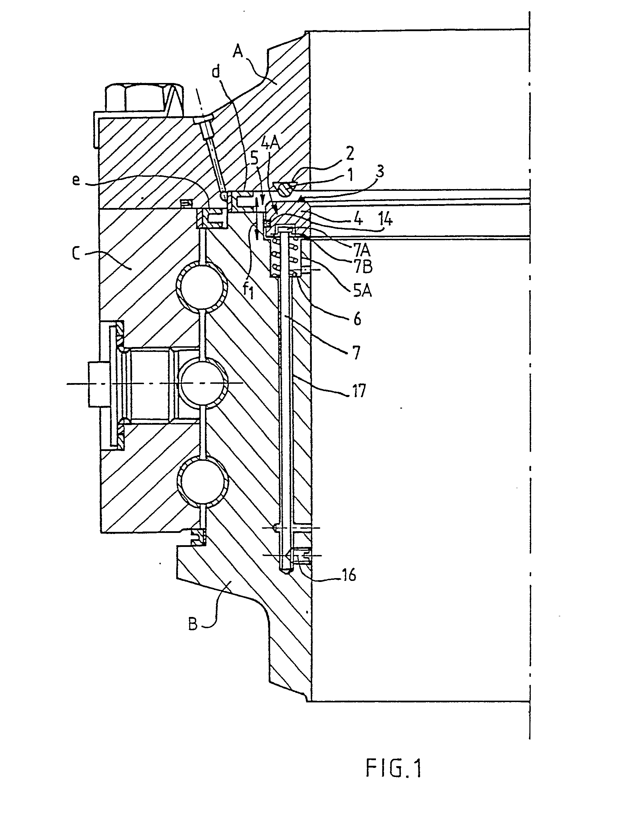

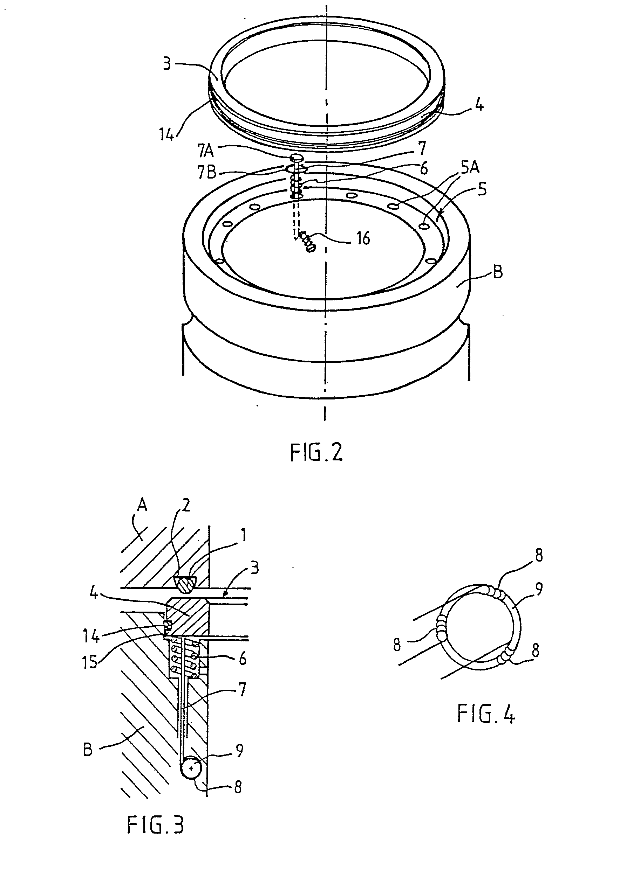

Dans la forme de réalisation représentée aux figures 1 et 2 en vis-à-vis du joint (1) est prévue une surface appui-joint (3) réalisée sur une pièce annulaire (4) qui peut coulisser suivant la double flèche f1 dans un décrochement annulaire (5) pratiqué dans la pièce (B) du raccord et ouvert vers l'intérieur de la pièce (B).

Des ressorts (6) logés dans des alésages (5A) appuient la surface appui-joint (3) de la pièce annulaire (4) sur le joint (1), lorsque le raccord est à température ambiante.

Des tiges (7) en un matériau à haut coefficient de dilatation thermique, par exemple en un produit de polymérisation du tétrafluoro-éthylène connu sous la marque "Téflon", sont prévues pour se rétracter lorsque la température s'abaisse et sont reliées à la pièce annulaire (4). La liaison est obtenue en retenant une tête (7A) de chaque tige dans un alésage correspondant (4A) pratiqué dans la pièce annulaire, à l'aide d'un clip (7B).

En se rétractant lorsque la température s'abaisse, les tiges (7) déplacent la pièce annulaire (4) et donc la surface appui-joint (3) vers la pièce (B) et dégagent ainsi le joint (1) qui, à partir d'une certaine température, n'est plus comprimé. Cela est rendu nécessaire par le fait que le joint en élastomère est fragilisé à basse température et serait endommagé s'il était soumis à des efforts mécaniques tendant à le déformer, sous ces basses températures.

Pour augmenter la déformation du dispositif de mise hors service de l'étanchéité supplémentaire entre les deux températures où il doit opérer, on peut augmenter la longueur des tiges en matériau à haut coefficient de dilatation en prévoyant une portion enroulée de celles-ci, qui se déforme plus ou moins suivant la température, la déformation étant transmise au reste de la tige.

Dans la forme de réalisation représentée aux figures 3 et 4, la portion enroulée (8) de chaque tige est enroulée autour d'un anneau commun (9).

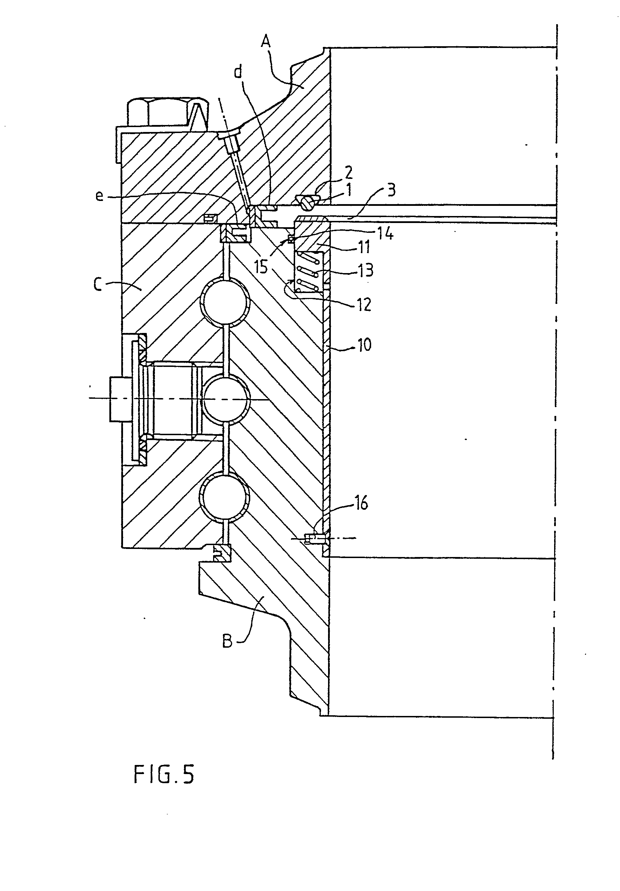

Suivant encore une variante (figure 5) en lieu et place de l'ensemble tiges et pièce annulaire avec ressorts, on peut utiliser un cylindre en un matériau à haut coefficient de dilatation. Ce matériau peut être, là également, du "Téflon".

Ce cylindre (10) comporte un entablement (11) montrant la surface appui-joint (3) et susceptible de coulisser dans un décrochement annulaire intérieur (12) pratiqué dans la pièce (B), des ressorts (13) étant interposés entre l'entablement (11) et le décrochement (12).

Dans toutes les formes de réalisation ci-dessus, un joint (14) est disposé dans une gorge (15) soit de la pièce (4) soit de l'entablement (11) de manière que le joint puisse porter contre la pièce (B).

Dans les formes de réalisation des figures 1, 2 et 5, les tiges (7) ou le cylindre (10) sont retenus à leur extrémité opposée à la pièce annulaire (4) ou à l'entablement (11) par une ou des vis (16).

Dans la variante à tiges de la figure 1, cette vis (16) traverse la pièce (B) du raccord pour atteindre la tige (7) logée dans un canal (17) venant en prolongement de l'alésage (5A).

Bien entendu le moyen d'étanchéité en présence du fluide basse température peut ne comporter qu'un seul niveau d'étanchéité, s'il est jugé suffisant, au lieu des deux niveaux d'étanchéité primaire et secondaire (d) et (e) des raccords dits cryogéniques.

Il est bien entendu, enfin, que la présente invention n'a été décrite et représentée qu'à titre d'exemple préférentiel et qu'on pourra apporter des équivalences dans ses éléments constitutifs sans, pour autant, sortir du cadre de l'invention qui est défini dans les revendications qui suivent.

**Revendications**

1. Raccord tournant du type à étanchéité cryogénique pour le transfert de produits fluides permettant, alternativement, le transfert de produits à basse température et le transfert de produits à température ambiante, comprenant au moins un moyen d'étanchéité cryogénique primaire (d) et secondaire (e), caractérisé en ce que: le raccord comprend un moyen supplémentaire d'étanchéité constitué d'une part, par un joint fixe (1) disposé sur l'une des pièces (A) du raccord et de l'autre part, pour une pièce annulaire d'appui-joint (4) ledit moyen supplémentaire d'étanchéité (1, 4) présente deux états d'utilisation: un état d'utilisation à température ambiante et un état d'utilisation à basse température, le raccord comprend un dispositif (7; 10) sensible au gradient thermique entre les deux états d'utilisation, réalisé en un matériau à haut coéfficient de dilatation thermique et se déformant longitudinalement, ledit dispositif mettant hors service ledit moyen supplémentaire d'étanchéité (1, 4) pour une utilisation à basse température et le mettant en service pour une utilisation à température ambiante.

2. Raccord tournant selon la revendication 1, caractérisé en ce que le dispositif sensible au gradient thermique est constitué par une série de tiges déformables (7), du fait du gradient thermique, ledit dispositif agissant sur un moyen intermédiaire constitué par la pièce annulaire d'appui-joint (4) montée ressorts (6) et reliée aux tiges déformables (7).

3. Raccord tournant selon la revendication 2, caractérisé en ce que les tiges déformables (7) sont prolongées par une portion enroulée (8) de celles-ci.

4. Raccord tournant selon la revendication 1 caractérisé en ce que le dispositif sensible au gradient thermique est constitué par un seul et même cylindre en un matériau à haut coéfficient de dilatation thermique.

5. Raccord tournant selon la revendication 4, caractérisé en ce que le cylindre présente un entablement (11) monté sur ressorts (13).

6. Raccord tournant selon l'une quelconque des revendications 1 à 5, caractérisé en ce que le dispositif sensible au gradient thermique (7 ou 10) est, à la manière connue, un produit de polymérisation du tétrafluoro-éthylène connu sous la marque "Téflon".

7. Raccord tournant selon l'une quelconque des revendications 1 à 6, caractérisé en ce que ledit moyen d'étanchéité cryogénique comporte les deux moyens primaire (d) et secondaire (e).

**Patentansprüche**

1. Drehverbindung der bei Tiefsttemperaturen abdichtenden Art für die Übertragung von Fluid-Produkten, die alternativ die Übertragung von Produkten bei tiefster Temperatur und die Übertragung von Produkten bei Umgebungstemperatur zuläßt, mit mindestens einem primären Tiefsttemperatur-Dichtmittel (d) und einem sekundären Tiefst-temperatur-Dichtmittel (e), dadurch gekennzeichnet, daß die Verbindung ein zusätzliches Dichtmittel enthält, das einesteils durch eine festliegende Verbindung (1) gebildet ist, die in einem der Teile (A) der Verbindung angeordnet ist, und andererseits durch ein ringförmiges Stützverbindungsteil (4) mit zwei Gebrauchszuständen: einem Gebrauchszustand des zusätzlichen Dichtmittels (1, 4) bei Umgebungstemperatur und einem Gebrauchszustand bei tiefer Temperatur, daß die Drehverbindung eine auf den Temperaturgradienten zwischen den zwei Gebrauchszuständen reagierende Einrichtung (7; 10) enthält, die durch ein Material mit hohem thermischen Ausdehnungskoeffizienten realisiert ist und sich in Längsrichtung verformt, wobei diese Einrichtung außer Funktion mit dem zusätzlichen Dichtmittel (1, 4) bei einer Verwendung bei tiefer Temperatur und in Funktion bei einer Verwendung bei Umgebungstemperatur ist.

2. Drehverbindung nach Anspruch 1, dadurch gekennzeichnet, daß die auf den Temperaturgradienten reagierende Einrichtung durch eine Reihe von durch den Temperaturgradienten verformbaren Stiften (7) gebildet wird, wobei die Einrichtung über ein Zwischenmittel wirkt, das durch das Ringstützteil (4) gebildet wird, das auf Federn (6) befestigt ist und sich auf den verformbaren Stiften (7) abstützt.

3. Drehverbindung nach Anspruch 2, dadurch gekennzeichnet, daß die verformbaren Stifte (7) durch einen eingerollten Abschnitt (8) derselben verlängert sind.

4. Drehverbindung nach Anspruch 1, dadurch gekennzeichnet, daß die auf den Temperaturgradienten reagierende Einrichtung durch ein und denselben Zylinder aus einem Material mit hohem thermischen Ausdehnungskoeffizient gebildet ist.

5. Drehverbindung nach Anspruch 4, dadurch gekennzeichnet, daß der Zylinder einen auf Federn (13) angebrachten verbreiterten Rand (11) aufweist.

6. Drehverbindung nach einem der Ansprüche 1 bis 5, dadurch gekennzeichnet, daß die auf den Temperaturgradienten reagierende Einrichtung (7; 10) in an sich bekannter Weise aus einem unter der Marke "Teflon" bekannten Polymerisationsprodukt von Tetrafluor-Ethylen gebildet ist.

7. Drehverbindung nach einem der Ansprüche 1 bis 6, dadurch gekennzeichnet, daß das Tiefsttemperatur-Dichtmittel die beiden primären (d) und sekundären (e) Mittel umfaßt.

**Claims**

1. A rotary connector of the cryogenic tightness. type for transfer of fluid products to permit alternately transfer of low temperature products and transfer of ambient temperature products, comprising at least one primary (d) and secondary (e) cryogenic tightness means, characterized in that the connector comprises a supplementary tightness means consisting of a fixed seal (1) disposed on one of the parts (A) of the connector, on the one hand, and on the other hand, of an annular supporting sealing part (4), said supplementary tightness means (1, 4) presents two states of use: one state of use at the ambient temperature and another state of use at low temperature, the connector comprises a device (7, 10) responsive to the thermal gradient between the two states of use, realized from a high thermal dilation coefficient material and deforming longitudinally, said device causing said supplementary tightness means (1, 4) to be inoperative for a low temperature use and to be operative for an ambient temperature use.

2. A rotary connector according to claim 1, characterized in that the thermal gradient responsive device consists of a series of rods (7), deformable due to the thermal gradient, said device acting upon intermediary means consisting of the annular supporting seal (4) mounted on springs (6) and connected to the deformable rods (7).

3. A rotary connector according to claim 2, characterized in that the deformable rods (7) are extended by a coiled portion (8) thereof.

4. A rotary connector according to claim 1, characterized in that the thermal gradient responsive device consists of one and the same cylinder of a material of high thermal dilation coefficient.

5. A rotary connector according to claim 4, characterized in that the cylinder presents an entablature (11) mounted on springs (13).

6. A rotary connector according to any one of claims 1 to 5, characterized in that the thermal gradient responsive device (7 or 10) is in a known manner a polymerization product of tetrafluoroethylene known under the trade mark "Teflon".

7. A rotary connector according to any one of claims 1 to 6, characterized in that said cryogenic tightness means comprises both primary (d) and secondary (e) means.

FIG.1

FIG.2

FIG.3

FIG.4

FIG.5